Europäisches Patentamt

European Patent Office

Office européen des brevets

(11) Publication number: **0 225 725**
A2

## (12) EUROPEAN PATENT APPLICATION

(21) Application number: 86308694.8

(22) Date of filing: 07.11.86

(51) Int. Cl.4: **H02G 3/12** , E04C 1/39

(30) Priority: 08.11.85 GB 8527659

(43) Date of publication of application:
16.06.87 Bulletin 87/25

(84) Designated Contracting States:
AT BE CH DE ES FR GB GR IT LI LU NL SE

(71) Applicant: **Rea, Philip Leslie**
**"Melleray" 7a, Hillcrest Road**
**Ealing London W5 2JL(GB)**
Applicant: **Bagshaw, Stanley Robert**
**19, Georgewood Road**
**Hemel Hempstead Hertfordshire HP3**
**8AL(GB)**

(72) Inventor: **Rea, Philip Leslie**
**"Melleray" 7a, Hillcrest Road**
**Ealing London W5 2JL(GB)**
Inventor: **Bagshaw, Stanley Robert**
**19, Georgewood Road**
**Hemel Hempstead Hertfordshire HP3**
**8AL(GB)**

(74) Representative: **Walter, Douglas Ernest et al**
**HASELTINE LAKE & CO. Hazlitt House 28**
**Southampton Buildings Chancery Lane**
**London WC2A 1AT(GB)**

(54) **Building blocks.**

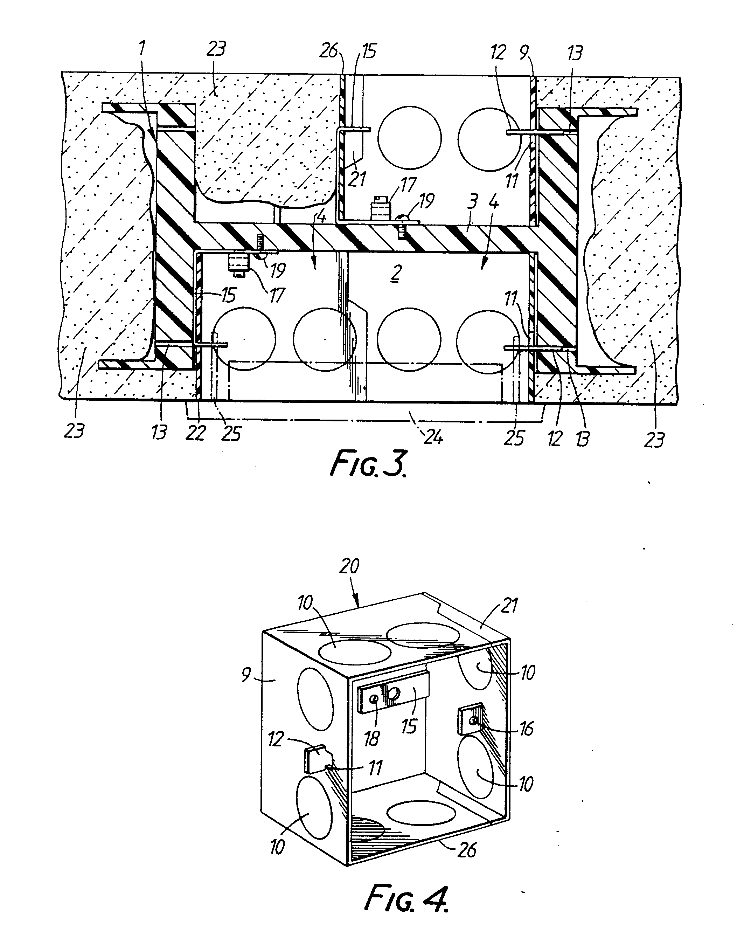

(57) A building block (1) is formed from a strong synthetic plastics or other material and has a size which is the same as, or a simple multiple, or sub-multiple, of that of a standard building block or a standard building brick with which the block (1) is destined to be used. The block (1) defines, at at least one side, a central oblong recess (2) in which, with or without the assistance of a two-part box member (4), a "double" socket, switch or other electrical item (24, Figure 3) can be accommodated employing machine screws 25 (Figure 3) conventionally supplied with the item (24) to co-operate with screw-threaded holes (14) in metal fastening strips (12) to secure the electrical item (24) reliably in its appointed position. The size and construction of the block (1) enable it to co-operate with standard building bricks in, for example, replacing a single breeze block so that substantially no "chasing out" or other preparation work is required on site to enable electrical sockets, switches and the like to be provided wherever is desirable, the extra cost of additional blocks (1) being more than compensated for by the considerable reduction in on site installation work that results from their use.

FIG. 1.

## BUILDING BLOCKS

This invention relates to building blocks of the kind that are employed in constructing the walls of houses, offices, shops, commercial and pre-fabricated buildings of many types, and particularly but not exclusively the inner walls of domestic and other cavity walling. Where electric power sockets and switches or points for the connection of radio and television aerials, telephone cables and the like are to be mounted on a wall, it is the usual practice to chase out or otherwise form a recess in a standard building block and the plaster which covers it, the recess receiving a matchingly shaped metal or synthetic plastics conduit box into which, usually from the interior of the wall, cables extend for connection to the terminals at the rear of the socket, switch or the like that is to be mounted in the conduit box. Conventionally, such a socket, switch or the like has a front plate which is pressed against the material of the wall, in concealing relationship with the mouth of the mounting recess, by a pair of spaced machine screws that co-operate with threaded receptors in the fixedly installed conduit box.

The arrangement briefly discussed above is effective but has the disadvantage that a considerable amount of preparation work has to be undertaken, usually "on site", wherever any conduit box is to be installed, this being time consuming and thus expensive, so that there is a tendency for less power sockets and other electrical service points to be furnished in new and refurbished buildings than would really be convenient for their eventual users. Accordingly, an object of the invention is to furnish building blocks which will co-operate with other building blocks and bricks whilst requiring substantially no preparation work for the purpose discussed above. According to the invention, there is provided a building block characterised in that it is recessed to accommodate the body of at least one electrical socket, switch or the like, the block comprising means to enable such a socket, switch or the like to be releasably secured thereto and having overall dimensions that are the same as, or a simple multiple, or sub-multiple, of those of a standard building block or a standard building brick with which the building block is destined to be employed.

For a better understanding of the invention, and to show how the same may be carried into effect, reference will now be made, by way of example, to the accompanying drawings, in which:-

Figure 1 is a perspective view of a synthetic plastics building block in accordance with the invention accommodating a synthetic plastics conduit box member intended for the reception of a "double" socket unit;

Figure 2 is a partially exploded perspective view of the conduit box member appearing in Figure 1, one end thereof being shown partly broken away;

Figure 3 is a sectional plan view taken in a horizontal plane mid-way between the uppermost and lowermost surfaces of the block shown in Figure 1; and

Figure 4 is a similar view to Figure 2 but shows a conduit box member arranged for the reception of a "single" socket unit, the synthetic plastics conduit box member of Figure 4 being turned through 180° about a horizontal axis as compared with the position of the box member that is visible in Figure 2.

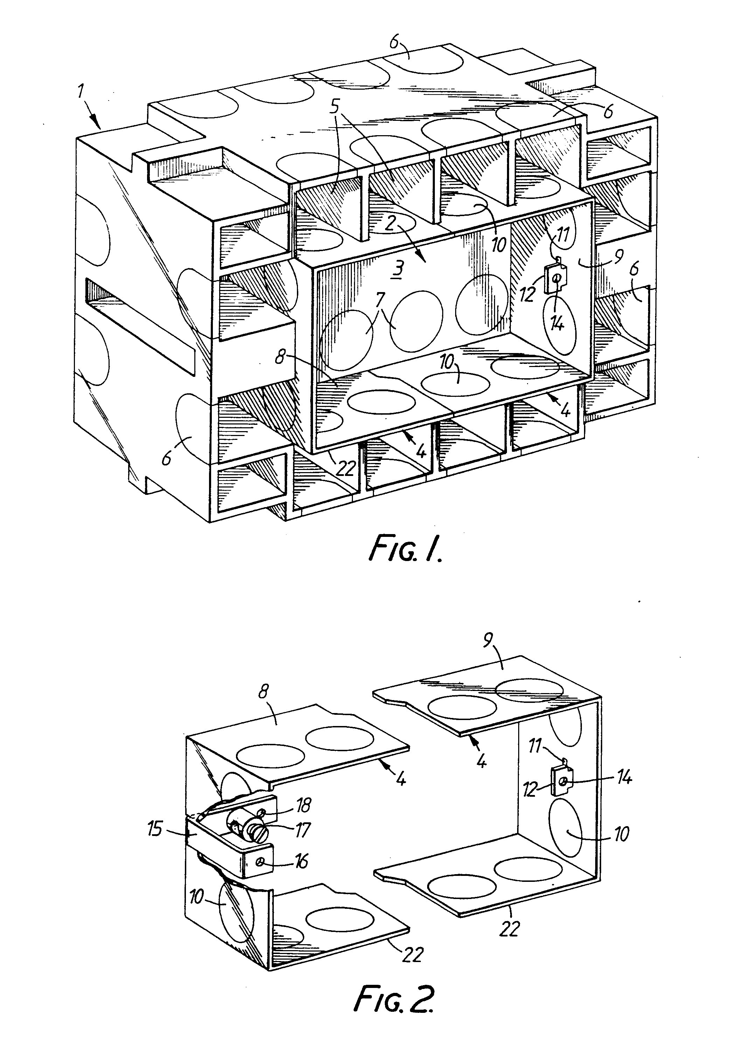

Referring to the accompanying drawings, the building block 1 that is illustrated in Figures 1 and 3 thereof is moulded from an electrically insulating synthetic plastics material such, purely for example, as high density polyethylene which, since it will not normally be visible in the finished building of which it is to form a part, may have its natural colour. Coloured pigments could, however, be incorporated in building blocks in accordance with the invention so as visually to distinguish one form of such a building block intended for one purpose from other forms of the building block intended for different purposes. Whilst any strong, and readily mouldable synthetic plastics material would be suitable for the formation of the blocks 1, other materials could be employed such, purely for example, as glass or metal.

Three surfaces of the cuboid building block 1 are visible in the perspective view of Figure 1 of the drawings and the opposite surface to each illustrated one is symmetrically identical, this particular building block 1 being one that is intended to form part of an internal wall of a building and to be able to accommodate two "double" electrical switches or sockets in a back-to-back disposition at opposite sides of the wall. One possible arrangement of the block 1, when in use, is shown in Figure 3 of the drawings and, in that Figure, the lower region of the sectional view corresponds to the larger vertical side that can be seen in Figure 1 whereas the upper region shown in Figure 3, which corresponds to the larger vertical side of the block 1 that is concealed in Figure 1, is shown arranged to receive only a "single", rather then "double", switch or socket.

An oblong recess 2, which is large in size relative to that of the complete block 1, is formed centrally at each of the opposite sides of a vertically extending wall 3 in the middle of the block. Each recess 2 is sized directly to receive the body of a standard commercially available "double" electrical socket, a "double" electrical switch, or an additional conduit box member 4 such as the one which is shown in Figures 1, 2 and 3 of the drawings. Each oblong recess 2 is surrounded to a large extent by moulded cellular gaps 5 in the material of the block 1 which gaps 5 will receive light concrete, mortar, plaster and/or other initially semi-liquid building materials to secure the block 1 in a fixed position in a wall in a substantially conventional manner. That surface of each cellular gap 5 which is outermost with respect to the centre of the block 1 is formed with a partition 6 that can be removed, when required, to give open communication to the interior of the recess 2 concerned. The partitions 6 may be moulded from very thin material, as compared with the remainder of the block 1, or their margins may be formed with perforations. In either case, the partitions 6 can readily be broken away using finger pressure or the blade of a screwdriver or other tool so that electric wires and cables emerging from plastics or metal conduits embedded in the wall into which the block 1 is to be incorporated can readily enter the recesses 2 through some of the gaps 5 and the openings left by the removal of the appropriate partitions 6. Conveniently, as shown in Figure 1 of the drawings, the central wall 3 of the block 1 may also be formed with a number of circular or other partitions 7 any one or more of which, when required, can be readily removed, using finger pressure or the blade of a tool, to give open access between the two recesses through the central wall 3. This enables electrical cable directly to interconnect the two "double" sockets that are to be installed in the two recesses 2.

Use may conveniently, but not essentially, be made of the conduit box member 4 which is shown in Figures 1, 2 and 3 of the drawings. This box member 4 is preferably formed from a relatively thin synthetic plastics material and is sized to be a close, although not tight, fit inside one of the recesses 2. As can be seen best in Figure 2 of the drawings, the illustrated box member 4 comprises two separable and non-interlocking parts 8 and 9 each of which parts affords approximately half of the complete box member 4, the shape of the co-operating free edges that are substantially mid-way along the upper and lower walls thereof being clearly visible in Figure 2. It will immediately be realised that the particular form of these matching edges that is illustrated is by no means critical and that almost any other simple non-interlocking edge shape could be substituted, if preferred. All four surfaces of the complete box member 4 are formed with circular or other partitions 10 any one or more of which can quickly and easily be broken away, to leave a circular or other hole, in the same way as has already been described for the partitions 6 and 7. It is, however, particularly noted that each partition 10 does not extend to the neighbouring free edge of the box member 4 as does each partition 6 to the neighbouring free edge of the block 1. The partitions 10 may be selectively removed in register with removed partitions 6 to enable electrical cables to pass right through any chosen cellular gap 5 and into the interior of the respective recess 2 inside the walls of the box member 4 concerned.

A slot 11 of compound shape is formed in the upright wall of the part 9 of the box member 4 and, in the use thereof, a short stainless steel, brass or other metallic strip 12 having good electrical conductivity but a high resistance to corrosion is entered through the slot 11 so that one end thereof projects some distance into a vertical slot 13 - (Figure 3) formed in a portion of the material of the block 1 that is located between two of the gaps 5. As will be evident from Figures 2, 3 and 4 of the drawings, the strip 12 has a central constricted portion which will lodge in a narrower portion of the slot 11 in such a way that, when so lodged, said strip 12 can no longer move lengthwise through the slot 11. The whole of the strip 12 can, on the other hand, readily move lengthwise through the broader portion of the slot 11. Vertical slots 13 (Figure 3) extend horizontally into the material of the block 1 between pairs of the gaps 5 so as to open the recesses 2 and it will be seen that one end of the strip 12 can extend a significant distance into a registering vertical slot 13 whilst its other end, which is formed with a screw-threaded hole 14 - (Figure 2), projects into the interior of the box member 4 through the narrower portion of the slot 11.

The part 8 of the box member 4 co-operates with a stainless steel, brass or other shaped metallic strip 15 which, basically, has longer and shorter parallel limbs and an integrally interconnecting relatively perpendicular limb. The relatively short limb protrudes through a plain vertical slot in the normally upright wall of the box part 8, the "perpendicular" limb extends along the exterior of that wall and the longer "parallel" limb lies at the open rear of the box 4 and, in use (Figure 3), against one surface of the central wall 3 of the block 1. The shorter parallel limb of the strip 15 is formed with a screw-threaded hole 16 whilst the limb thereof that will lie against one surface of the central wall 3 of the block 1 when the strip 15 is in use carries an electrical terminal 17 of known construction incorporating a grub screw or other releasable wire clamp, said limb of the strip 15 also being formed with a small plain hole 18 through which, when required, a relatively short self-tapping anchor screw 19 can be entered to secure the strip 15 firmly to the material of the block 1. It will be appreciated that, when the box 4 is entered in one of the recesses 2 and is employed in the manner shown in Figure 3 of the drawings, its two separable halves 8 and 9 will both be reliably retained in that recess 2 by the co-operation of the relatively short strip 12 with one of the slots 13 and the co-operation of the anchor screw 19 with the hole 18 and the material of the block 1.

Figure 4 of the drawings showns an alternative conduit box member 20 which is sized to receive a "single" electrical socket or switch and which is shown employed in the upper half of Figure 3. However, the box member 20 employs the same box part 9 as does the box member 4, albeit inverted as compared with its position of use in the box member 4. The box part 9 of the box member 20 co-operates, in this case, with a box part 21 whose upper and lower wall exhibits substantially only the edge portions that will co-operate with the matching edges of the box part 9 so that the complete box member 20 is much smaller than the complete box member 4 and is shaped to co-operate with a "single" electrical socket, switch or the like. The box part 21, which exhibits little more than a normally substantially vertical wall, is formed, in that wall, with two of the partitions 10 and with the slot that receives the shorter parallel limb of the strip 15 in which the screw-threaded hole 16 is formed, the longer parallel limb thereof lying at the open rear of the box member 20, as seen in Figure 4 of the drawings, for anchorage to the central wall 3 of the block 1 by one of the screws 19, entered through the corresponding hole 18, as can be seen in Figure 3. Figure 4 does not show the terminal 17 but shows a hole, alongside the plain hole 18, into which the body of that terminal 17 could be secured.

The dimensions of a standard building brick are a simple sub-multiple of those of a standard building breeze block and it will therefore be realised that, at an appropriate position in a wall that is being constructed, it is only necessary to omit one breeze block and to replace it by the block 1 that has been described and an appropriate number of standard building bricks, the block 1 itself having dimensions which are the same as, or are a simple multiple of those of, a standard building brick and a simple sub-multiple of those of a standard breeze block. Thus, no significant preparation work is necessary to provide recesses 2 that are ready for the installation of electrical "single" and/or "double" sockets, switches and the like, it only being necessary to break out appropriate ones of the partitions 6, 7 and 10. The remainder of the space that would normally be filled by a single breeze block is completed by the installation of standard building bricks.

It will be noted from the drawings that the box member 4 has a free edge 22 that projects forwardly from the body of the block 1 itself. Figure 3 shows the practical employment of this edge 22 which is flush with that of material, such as light concrete, mortar or plaster 23, that may carry paint, wallpaper or some other decorative wall covering. A standard commercially available "double" electrical socket 24 is entered into the box member 4 which is itself fitted in the corresponding recess 2, the two machine screws 25 that are supplied with the "double" socket 24 co-operating with the screw-threaded holes 14 and 16 in the two strips 12 and 15 so that, once the screws 25 are tightened, the socket 24 will be secured in its appointed position for as long as may be required. The block 1 itself is concealed in the material 23 and the exposed free edge 22 of the box member 4 is concealed by the overlapping "double" socket 24. Any earthing connection that may be required is established merely by securing one end of an "earthing" wire to the terminal 17.

It will be apparent that a "single" electrical socket, switch or the like could be secured in the alternative box member 20 in much the same way as has been described above for the box member 4 except that, in this case, the alternative box member 20 is secured in its appointed position in one of the recesses 2 in such a way that its free edge 26, whilst once again projecting beyond the corresponding surface of the block 1 itself, defines only an opening large enough to receive the body of a "single" electrical socket, switch or the like, the mouth of that part of the recess 2 concerned which is not occupied by the box member 20 being covered and entirely concealed by the light concrete, mortar, plaster or the like 23. The screw-threaded holes 14 and 16 are once again available to co-operate with fastening machine screws equivalent to the screws 25 which are shown as being used to secure the "double" electrical socket 24 in its appointed position.

It is emphasised that the use of the box member 4 or 20, whilst preferred, is not absolutely essential. The two strips 12 and 15 can be effectively secured to the material of the block 1 by using one of the vertical slots 13 and one anchoring screw 19 without the box 4, or the alternative box 20, being present. The light concrete, mortar, plaster or the like 23 will then have a somewhat rough margin, rather than a smooth margin defined by the free edge 22 or the free edge 26, but the machine screws 25 will again co-operate perfectly satisfactorily with the screw-threaded holes 14 and 16 in securing either a "double" or a "single" electrical socket, switch or the like in the recess 2 concerned, the rough edge of the material 23 being concealed, in a conventional way, by the margin of that electrical socket, switch or the like.

It will be apparent that, whilst maintaining the required multiple and/or sub-multiple relationship between the size of a building block in accordance with the invention and the size of a standard breeze block and a standard building brick, many variations are possible. The illustrated block 1 could have substantially half the thickness shown in the drawings and thus be provided with a recess 2 at only one side, the other side, which would substantially correspond to the illustrated central wall 3, being blank apart from the provision of profiling for keying to the light concrete, plaster, mortar or the like 23. The or each recess 2 could be sized to take only a "single" socket, switch or other electrical unit in the first instance and the number, shape and position of the cellular gaps 5 and of the various partitions 6, 7 and 10 could be considerably varied. The or each recess 2 could be larger than illustrated to receive a "triple" socket, switch or the like and, if desired, the synthetic plastics box parts 8, 9 and 21 could be metallic instead of, as is preferred, being formed from a synthetic plastics material. Moreover, a commercially available one-piece metallic conduit box member of "single", "double", or "triple" size could take the place of one of the described box members 4 or 20 in any recess 2 of the same or larger size. The way in which a "double" recess 2 is arranged to receive a "single" socket, switch or any other electrical unit has been described in detail with particular reference to Figures 3 and 4 of the drawings and it will be appreciated that a "triple" recess 2 could be arranged to co-operate with a "double" or "single" socket, switch or the like in a basically identical manner.

The invention provides building blocks 1 that can be varied in detail having regard to the particular purpose for which they are required but which, whatever the particular construction employed, can be installed in the wall of a building to provide at least one recess 2 that is ready to receive a single or multiple electrical socket, switch, aerial socket or the like with substantially no preparation work being required at the building site. A building block in accordance with the invention has dimensions which are a simple multiple of those of a standard building brick and/or a simple sub-multiple of the dimensions of a larger standard building block, such as a breeze block, and this enables a single standard breeze block to be replaced by a block in accordance with the invention and several bricks, or at least one brick alone to be replaced by one block in accordance with the invention. A block in accordance with the invention could also have the same overall dimensions as those of either a standard building brick or a standard building block. The very significant reduction in expense that is involved in cutting out the site preparation work for the installation of conduit boxes enables a much larger number of power sockets, aerial sockets, telephone sockets, control switches and so on to be provided with substantially the only increase in expense being attributable to the extra cable that is sometimes required.

## Claims

1. A building block (1), characterised in that it is recessed (2) to accommodate the body of at least one electrical socket, switch or the like (24), the block (1) comprising means (12, 13, 15, 19) to enable such a socket, switch or the like (24) to be releaseably secured thereto and having overall dimensions that are the same as, or a simple multiple, or sub-multiple, of those of a standard building block or a standard building brick with which the building block (1) is destined to be employed.

2. A building block according to claim 1, characterised in that box members (4, 20) are provided to fit in the recesses (2), the box members (4, 20) being of such sizes that the bodies of electrical sockets, switches or the like (24) will fit therein when they occupy respective recesses (2).

3. A building block according to claim 2, characterised in that each box member (4, 20) has a free edge (22, 26) which, when installed in a recess (2), projects from the mouth of that recess (2) through a distance which is appropriate to have the exposed surface of light concrete, plaster, mortar or the like (23) flush therewith.

4. A building block according to any preceding claim, characterised in that the block (1) is moulded wholly or principally from a synthetic plastics material, and in that the means (12, 13, 15, 19) to enable a socket, switch or the like (24) to be releaseably secured thereto comprises electrically conductive strips (12, 15) one of which (12) is partially received in a slot (13) formed in the material of the block (1) and the other (15) of which is releaseably secured to the material of the block (1) by an anchor screw (19) entered through a hole (18) in one limb of said other metallic strip (15).

5. A building block according to claim 4, characterised in that said other metallic strip (15) is provided with an electrical terminal (17) to which wiring can be releaseably secured for earthing purposes.

6. A building block according to claim 2 or to any one of claims 3 to 5 when read as directly or indirectly appendant to claim 2, characterised in that the or each box member (4, 20) comprises two separable parts (8, 9 or 9, 21) that are constructed and arranged to fit together in a non-interlocking manner which is such that at least two different sizes of box member (4, 20) can be produced using one part (9) that is common to both sizes of box member (4, 20).

6. A building block according to any preceding claim, characterised in that a portion of the block - (1) surrounding the or each recess (2) is formed with a plurality of cellular gaps (5), and in that the outer surface of each of at least a plurality of the cellular gaps (5) is formed with a partition (6) which is constructed and arranged so as to be readily manually removable to leave an opening through which electrical cables can pass to reach the corresponding recess (2).

8. A building block according to claim 7 when read as directly or indirectly appendant to claim 2, characterised in that the walls of the or each box member (4, 20) are also formed with readily manually removable partitions (10) in positions which substantially register with at least some of the partitions (6) formed in the outer walls of the cellular gaps (5) of the block (1).

9. A building block according to any preceding claim, characterized in that it exhibits at least one recess (2) at each of two opposite sides thereof whereby the same block (1) can accommodate sockets, switches or the like (24) in a wall between two neighbouring rooms or the like, and in that a central wall (3) of the block (1) between two such recesses (2) is formed with at least one readily manually removable partition (7) so that, upon the removal thereof, electrical wiring can pass directly through the resultant hole(s) in the central wall (3) to interconnect electrical units housed in the recesses (2) concerned.

10. A building block according to any preceding claim, characterised in that the material from which the block (1) is formed is coloured to distinguish one particular form of block (1) visually from other differently coloured forms of block.

FIG. 1.

FIG. 2.

FIG. 3.

FIG. 4.